(19) Europäisches Patentamt / European Patent Office / Office européen des brevets

(11) **EP 3 450 163 B1**

(12) **EUROPEAN PATENT SPECIFICATION**

(45) Date of publication and mention of the grant of the patent:
**17.07.2019 Bulletin 2019/29**

(51) Int Cl.:
**B32B 27/18** (2006.01)      **B32B 27/30** (2006.01)
**G09F 3/00** (2006.01)       **G09F 3/10** (2006.01)
**C09J 7/24** (2018.01)

(21) Application number: **17188466.1**

(22) Date of filing: **30.08.2017**

(54) **BRITTLE ACRYLIC FILMS AND FORGERY PREVENTION LABELS COMPRISING THE SAME**

SPRÖDE ACRYLHALTIGE FILME UND FÄLSCHUNGSSCHUTZETIKETTEN DAMIT

FILMS ACRYLIQUES FRAGILES ET ÉTIQUETTES DE PRÉVENTION DE CONTREFAÇON LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2019 Bulletin 2019/10**

(73) Proprietor: **Evonik Röhm GmbH**
**64293 Darmstadt (DE)**

(72) Inventors:
• **SEYOUM, Ghirmay**
  **63329 Egelsbach (DE)**
• **PARUSEL, Markus**
  **64409 Messel (DE)**
• **BIRTH, Detlef**
  **64807 Dieburg (DE)**
• **PACHMANN, Jürgen**
  **68642 Bürstadt (DE)**

• **DICKHAUT, Günther**
  **68305 Mannheim (DE)**
• **MUSCI, Girolamo**
  **67227 Frankenthal (DE)**
• **GUÉNANTEN, Claude**
  **64291 Darmstadt (DE)**
• **RODRIGUES, Haroldo**
  **60314 Frankfurt (DE)**

(74) Representative: **Evonik Patent Association**
**c/o Evonik Industries AG**
**IP Management**
**PB 84/339**
**Rodenbacher Chaussee 4**
**63457 Hanau (DE)**

(56) References cited:
**WO-A1-2016/156137      US-A1- 2017 037 235**
**US-B1- 6 280 835**

## Description

## Field of the invention

The present invention relates to brittle acrylic films made from impact-modified polyalkyl (meth)acrylate and forgery prevention labels comprising these films. The films can be advantageously prepared by extrusion and, depending on the desired purpose, can be designed to be translucent or entirely non-transparent e.g. white. Ideally, the brittle acrylic films and the forgery prevention labels comprising these films have no intended break points such as slits, perforation etc. The forgery prevention labels of the present invention can therefore find use in documents, such as chip cards or passports, for example, in forgery prevention labels, road tax badges, for product theft prevention, or as price tags. Additionally, in contrast to other materials commonly employed for this purpose, the forgery prevention labels of the present invention have an excellent weathering stability and, in particular, an outstanding UV stability.

## Prior art

Forgery prevention labels, also known as security labels or anti-counterfeiting labels are known in the prior art. Typically, their bonding strength to a labelled substrate is high in comparison with the strength (flexural strength or tear strength) of the label itself. Therefore, ideally, such labels cannot be peeled off from the labelled article without destroying the label.

Forgery prevention labels which cannot be removed without being destroyed are used in diverse areas of application such as securement of documents, such as of chip cards, passports, road tax badges, labels for securing products against theft, or price tags. A typical prior-art chip card consists of up to 12 individual parts, which are assembled and programmed in up to 30 separate process steps. In such operations, the support layer, the layer having a magnetic strip, and separate laminate are applied for each function. Typically, one or more layers are needed to realize adequate protection from weathering, protection against scratching, and UV protection. In a further layer, a security layer which cannot be removed without being destroyed is applied to achieve anti-counterfeit security. Finally, the printing is often found on a separate outer layer, since the other above-mentioned layers are difficult to print.

Labels of the prior art applied as road tax badges for adhesive bonding to glass screens, generally comprise an optionally printable support layer made of PET, PVC, PE or BOPP. A second layer laminated onto this layer using a pressure-sensitive adhesive on one facing side, is needed for stabilization with respect to weathering. This second layer is generally composed of polycarbonates, PET or PVC. Since layers of this kind must possess a limited brittleness, not least for the sake of an improved processing, these labels have to be additionally structured, by means of incisions or perforations, to ensure that cannot be removed without being destroyed.

Forgery prevention labels made of pure PVC films are also known, especially in the form of white films. These films have a desirably low initial tear strength. Unfortunately, however, the PVC films have a relatively high resistance to tear propagation. This means that the PVC film may, under certain circumstances, be peeled off from the labelled substrate by a non-authorised person with only a minor, hardly noticeable tearing.

Since forgery prevention labels are highly brittle, their manufacturing and handling on an industrial scale is significantly more difficult than manufacturing and handling of common self-adhesive labels. For instance, if a film, for instance a polyalkyl(meth)acrylate film for use in forgery prevention labels is manufactured by extrusion, handling and use of such film becomes problematic, since it can easily become broken or torn apart.

To overcome this problem, US 6,280,835 suggests preparing brittle acrylic films by coating a polyethylene terephthalate foil used as a support with a liquid mixture which is obtained by dissolving a thermoplastic acrylic resin in a suitable solvent and mixing it with an inorganic filler. Thus, the extrusion step is avoided and the polyethylene terephthalate film provides the resulting multi-layer material with an adequate mechanical stability. Additionally, the solvent residues in the resulting film act as plasticisers, thereby rendering the film more flexible.

A further technical problem results from the fact that labels are typically manufactured from a label stock that comprises a face layer (facestock), an adhesive, e.g. a pressure-sensitive adhesive (PSA) layer adhered to the face layer, optionally, a release coating layer, and a support layer removably adhered to the adhesive layer or to the release coating layer. The label stock is generally provided in form of a roll. Individual labels are usually produced by die cutting (kiss cutting) the face layer and the PSA layer, and then removing the surrounding waste matrix, leaving the individual labels adhered to the release liner. Since the material of the face layer is highly brittle, removal of the waste matrix becomes highly problematic since it can easily break or tear apart.

Typical manufacturing processes for labels are run at speeds of at least 25 m/min or even higher. As the speed increases, the process becomes less stable and risk that the waste matrix breaks or tears apart upon removal increases. Slowing the process down or increasing the web width of the waste matrix to allow a better removal of the waste matrix, however, would result in a significant cost disadvantage, loss of efficiency, and may frequently be ineffective.

WO 2016/156137 A1 describes forgery prevention labels having a high transparency and comprising poly(meth)acrylate films. These labels have a good weathering stability and are suitable for use in documents such as passports, forgery prevention labels, road tax badges, price tags etc. The inventors report that poly(meth)acrylate films perform best when they comprise not more than 10 wt.-% of an impact modifier. Unfortunately, our subsequent studies showed that in some cases, in particular in the presence of considerable amount of inorganic fillers, such a low content of impact modifiers may become problematic during manufacturing of the labels, if the process for the manufacturing of such labels involves a kiss cutting (die cutting) step. Under these circumstances, the waste matrix can sometimes break or tear apart upon removal if the process is run at a high speed.

In principle, the problems associated with breaking or tearing apart of the waste matrix could be at least partially mitigated by increasing the distances between individual labels i.e. web width of the waste matrix. However, this would inevitably increase the amount of waste generated during the label manufacturing and diminish the process efficiency. Hence, such approach would not be feasible from economic and environmental points of view.

**Problem**

In light of the prior art, the problem addressed by the present invention was to provide a brittle film which can be advantageously employed for the manufacturing of forgery prevention labels on an industrial scale. In particular, such film should be suitable for a cost effective process in which individual labels are produced by kiss cutting the face layer and the PSA layer and the surrounding waste matrix is subsequently removed, leaving the individual labels adhered to the support layer.

More particularly, the problem addressed by the present invention was provision of a brittle film for the manufacturing of forgery prevention labels which possess a low initial tear strength, a low tear propagation resistance and a short tear path to facilitate a complete rupture of the film during an attempt of its non-authorised removal but, nevertheless, can be produced and processed without tearing.

In its further aspect, the present invention addressed the problem of providing self-adhesive forgery prevention labels which can be manufactured in a highly efficient manner, are printable and suitable for a long-term outdoor use.

Finally, the present invention addressed the problem of developing a safe and a cost-efficient process for the manufacturing the brittle film described above and the self-adhesive forgery prevention labels comprising the same.

**Solution**

The present invention is defined in the independent claims. Preferred embodiments of the invention are set out in the dependent claims.

The present invention is based on a surprising finding that the behaviour of a brittle acrylic film during a die cutting (kiss cutting) process, followed by stripping of the waste matrix, strongly depends on the ratio between the impact modifier amount and the amount of the inorganic filler in the film. In particular, the inventors surprisingly found that polyalkyl(meth)acrylate films, in which the content of one or several impact modifiers $n_{im}$, expressed in wt.-% based on the total weight of the film, is described by the following relationship:

$$0.5{*}n_f \leq n_{im} \leq n_f$$

$n_f$ being the content of one or several inorganic fillers, expressed in wt.-% based on the total weight of the film, is particularly suitable for processing by a kiss cut process. Therefore, forgery preventing labels comprising the film of the present invention can be advantageously manufactured upon employing a step in which individual labels are produced by kiss cutting, and the surrounding waste matrix is subsequently removed, leaving the individual labels adhered to the release liner. No undesired breaking of the waste matrix takes place, even at running speeds of at least 25 m/min or even higher.

In the present application, the content of one or several impact modifiers $n_{im}$ is the content of neat impact modifiers. In case of particulate several impact modifiers $n_{im}$ is the content of neat impact modifier particles. Hence, if the corresponding impact modifiers are rubbery particles, $n_{im}$ is the content of the rubbery particles in the polyalkyl(meth)acrylate film. If the corresponding impact modifiers are core-shell or core-shell-shell particles, $n_{im}$ is the content of the entire particles in the polyalkyl(meth)acrylate film.

Hence, one aspect of the present invention relates to a forgery prevention label comprising a polyalkyl(meth)acrylate film, wherein the polyalkyl(meth)acrylate film comprises:

> from 30.0 wt.-% to 92.5 wt.-% of a polyalkyl(meth)acrylate;
> from 2.5 wt.-% to 40.0 wt.-% of one or several impact modifiers;
> from 5.0 wt.-% to 40.0 wt.-% of one or several inorganic fillers;
> from 0.0 wt.-% to 5.0 wt.-% of one or several UV-absorbers; and
> from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifiers is from 60.0 wt.-% to 95.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5^*n_f \le n_{im} \le n_f$$

$n_f$ being the content, in wt.-%, of one or several inorganic fillers in the polyalkyl(meth)acrylate film.

In yet a further aspect, the present invention relates to use of the polyalkyl(meth)acrylate film as specified above in a forgery prevention label.

In yet a further aspect, the present invention relates to a process for the manufacturing a forgery prevention label using the polyalkyl(meth)acrylate film as specified above.

Still, in a further aspect, the present invention relates to a forgery prevention label comprising the polyalkyl(meth)acrylate film as specified above.

In yet a further aspect, the present invention relates to a laminate **4** for the manufacturing of a forgery prevention label, the laminate comprising at least the following layers:

- a layer consisting of extruded polyalkyl(meth)acrylate film **6** as specified above, and
- a liner layer **5** preferably having initial tear resistance, measured according to ASTM D1004-13, of from 50 N to 500 N.

In yet a further aspect, the present invention relates to use of the above laminate for the manufacturing of a forgery prevention label.

Still, in a further aspect, the present invention relates to a forgery prevention label, characterized in that the forgery prevention label comprises at least the following layers in the order stated:

a) a layer **6** consisting of extruded polyalkyl(meth)acrylate film;
b) an adhesive layer **7**;
c) optionally, a release coating layer **8**, and
d) a support layer **9**;

wherein the forgery prevention label has a thickness of between 50 $\mu$m and 300 $\mu$m.

In yet a further aspect, the present invention relates to a process for the manufacturing of forgery prevention labels as specified above, the process comprising at least the following steps:

i) extrusion of a polyalkyl(meth)acrylate film as defined above in an extruder, wherein the polyalkyl(meth)acrylate film is obtained; and
ii) binding a liner layer to the polyalkyl(meth)acrylate film from the step i) downstream of the extruder, wherein a laminate is obtained;
iii) binding an adhesive layer, optionally, a release coating layer and a support layer onto the laminate from step ii), wherein a label stock is obtained;
iv) kiss cutting the label stock obtained in the step iii) and removing the resulting waste matrix,

wherein a plurality of individual self-adhesive forgery prevention labels on a support layer is obtained.

Finally, the invention relates to use of the forgery prevention labels for the manufacturing of chip cards, documents, forgery prevention labels, other labels or price tags.

Brief description of drawings

Fig. 1      schematic representation of an endless label stock **1** after a kiss cutting process. In a subsequent process step the waste matrix **3** is removed from the support layer thereby leaving a plurality of individual forgery prevention labels **2** attached to the support layer.

Fig. 2      side view of a laminate **4** for the manufacturing of forgery prevention labels comprising the liner layer **5** and the layer consisting of the polyalkyl(meth)acrylate film **6**.

Fig. 3      side view of a forgery prevention label **2** comprising at least the following layers:

a) a layer consisting of the polyalkyl(meth)acrylate film **6**;
b) an adhesive layer **7**;
c) optionally, a release coating layer **8**, and
d) a support layer **9**.

Detailed description

The polyalkyl(meth)acrylate film of the present invention has the following composition:

from 30.0 wt.-% to 92.5 wt.-% of a polyalkyl(meth)acrylate;
from 2.5 wt.-% to 40.0 wt.-% of one or several impact modifiers;
from 5.0 wt.-% to 40.0 wt.-% of one or several inorganic fillers;
from 0.0 wt.-% to 5.0 wt.-% of one or several UV-absorbers; and
from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifier is from 60.0 wt.-% to 95.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5^*n_f \le n_{im} \le n_f$$

preferably $0.55 * n_f \le n_{im} \le 0.9 * n_f$
more preferably $0.6 * n_f \le n_{im} \le 0.8 * n_f$
$n_f$ being the content, in wt.-%, of one or several inorganic fillers in the polyalkyl(meth)acrylate film.

As will be readily appreciated by a skilled person, the amounts of

- a polyalkyl(meth)acrylate;
- one or several impact modifiers;
- one or several inorganic fillers;
- one or several UV-absorbers; and
- one or several UV-stabilizers, based on the weight of the polyalkyl(meth)acrylate film

sum up to 100 wt.-% in total.

Furthermore, the inventors found that the balance between suitability to a manufacturing process employing a kiss cut step, followed by a subsequent waste matrix removal, on one hand, and ability to resist a non-authorised attempt to peel off the forgery prevention label from the intended substrate, on the other hand, is particularly advantageous when the polyalkyl(meth)acrylate film comprises:

from 30.0 wt.-% to 85.0 wt.-% of a polyalkyl(meth)acrylate;
from 5.0 wt.-% to 35.0 wt.-% of one or several impact modifiers;
from 10.0 wt.-% to 35.0 wt.-% of one or several inorganic fillers;
from 0.0 wt.-% to 5.0 wt.-% of one or several UV-absorbers; and
from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifier is from 65.0 wt.-% to 90.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5 * n_f \le n_{im} \le n_f$$

preferably $0.55 * n_f \le n_{im} \le 0.9 * n_f$
more preferably $0.6 * n_f \le n_{im} \le 0.8 * n_f$
$n_f$ being the content, in wt.-%, of one or several inorganic fillers in the polyalkyl(meth)acrylate film.

Furthermore, the properties of the polyalkyl(meth)acrylate film of the present invention can be even further improved if the polyalkyl(meth)acrylate film comprises:

from 30.0 wt.-% to 77.5 wt.-% of a polyalkyl(meth)acrylate;
from 7.5 wt.-% to 30.0 wt.-% of one or several impact modifiers;
from 15.0 wt.-% to 30.0 wt.-% of one or several inorganic fillers;
from 0.0 wt.-% to 5.0 wt.-% of one or several UV-absorbers; and
from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifier is from 70.0 wt.-% to 85.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5 * n_f \le n_{im} \le n_f$$

preferably $0.55 * n_f \le n_{im} \le 0.9 * n_f$
more preferably $0.6 * n_f \le n_{im} \le 0.8 * n_f$
$n_f$ being the content, in wt.-%, of one or several inorganic fillers in the polyalkyl(meth)acrylate film.

In yet an even more preferred embodiment, the polyalkyl(meth)acrylate film may comprise:

from 30.0 wt.-% to 70.0 wt.-% of a polyalkyl(meth)acrylate;
from 10.0 wt.-% to 25.0 wt.-% of one or several impact modifiers;
from 20.0 wt.-% to 25.0 wt.-% of one or several inorganic fillers;
from 0.0 wt.-% to 5.0 wt.-% of one or several UV-absorbers; and
from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifier is from 75.0 wt.-% to 80.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5 * n_f \le n_{im} \le n_f$$

preferably $0.55 * n_f \le n_{im} \le 0.9 * n_f$
more preferably $0.6 * n_f \le n_{im} \le 0.8 * n_f$
$n_f$ being the content, in wt.-%, of one or several inorganic fillers in the polyalkyl(meth)acrylate film.

Polyalkyl(meth)acrylate film

Typically, the polyalkyl(meth)acrylate film of the present invention consists of one single layer *i.e.* is a monolayer film. Such films can be manufactured by methods known to a skilled person such as solution coating, casting or extrusion, wherein the extrusion is particularly preferable in terms of high productivity and advantageous properties of the resulting film. Surprisingly, despite the polyalkyl(meth)acrylate film of the present invention is highly brittle, the film can be conveniently manufactured by extrusion and *e.g.* subsequently stored for shipping to a customer or used immediately for the manufacturing of forgery prevention labels.

To serve the desired purpose in an optimal way, the polyalkyl(meth)acrylate film of the present invention preferably has an initial tear resistance of from 0.1 N to 30.0 N, preferably from 1.0 N to 15.0 N. Although the film having an initial tear resistance lower than 0.1 N still would be suitable for use according to the present invention, a great attention would need to be taken during its manufacturing and handling, since the film can easily tear apart.

On the other hand, although the polyalkyl(meth)acrylate film of the present invention having an initial tear resistance of more than 30.0 N is highly suitable for the manufacturing process of forgery prevention labels, use of forgery prevention labels with such a low brittleness could bear an increased risk that such label can be removed using a thin sharp blade (*e.g.* a razor blade) from the originally labelled substrate and subsequently re-attached onto a different substrate. Hence, from the standpoint of having a good balance between the property for handling and brittleness, the initial tear resistance is preferably in the range of from 1.0 N to 15.0 N. The initial tear resistance of the polyalkyl(meth)acrylate film can be measured by a common method known to a skilled person such as the method described in the norm ASTM D1004-13 and is typically measured in the direction of extrusion.

Furthermore, to ensure an optimal balance between processability of the polyalkyl(meth)acrylate film and the ability of the final forgery prevention labels to withstand non-authorised removal attempts, it is preferable that the polyalkyl(meth)acrylate film has elongation at break ranging between 0.5% to 15%, whereby elongation at break ranging between 1.0% to 5.0% is particularly preferable. If the elongation at break is less than 0.5%, flexibility is excessively small, handling of the film becomes difficult and great care should be taken during manufacturing to avoid damaging the film. Under these circumstances, the manufacturing process may need to be run at a lower speed. On the other hand, when the elongation at break exceeds 15.0%, the brittleness of the film tends to be decreased. Therefore, during an attempt to remove the forgery prevention label with a thin sharp blade a minor mechanical deformation of the film (*i.e.* less than 15%) may not necessarily lead to its complete rupture. This increases the risk that a skilled and experienced individual using a sufficiently thin and sharp tool may succeed in removing the forgery prevention label from the original substrate (*e.g.* a passport) in order to re-attach it to a different object. The elongation at break of the polyalkyl(meth)acrylate film can be measured by a common method known to a skilled person such as the one described in the norm ASTM D1004-13.

In one preferred embodiment, the initial tear resistance of the polyalkyl(meth)acrylate film is at least 10 times as high, preferably at least 50 times as high, even more preferably at least 100 times as high as the resistance to tear propagation. This is particularly advantageous and ensures that even a minor film rupture occurring during an unauthorised attempt to remove the forgery prevention label from a substrate rapidly propagates through the entire label and results in a complete label destruction. This additionally reduces the risk of an unauthorised label removal. Ideally, the polyalkyl(meth)acrylate film has resistance to tear propagation, of from 0.01 N to 1.0 N, more preferably of from 0.02 N to 0.2 N. The resistance to tear propagation can be measured according to the norm ASTM D1938-14 and is typically measured in the direction of extrusion.

Generally speaking, commercial PMMA films used as weathering protection films typically have an elongation at break of between 50% and 100%. For the skilled person it is surprising that films having a significantly lower elongation at break can be used as forgery prevention labels without any perforation or cuts. With little effort and complexity, the skilled person is able to set the elongation at break within the range according to the invention. There are also various influencing factors which, by being varied, allow the skilled person to influence the elongation at break in the desired direction.

The major influencing factors are the amounts of impact modifiers and fillers. More particularly, an increase in concentration of the impact modifiers also increases the elongation at break, and so very small amounts or the complete absence of impact modifiers contribute to an elongation at break in accordance with the invention.

The thickness of the polyalkyl(meth)acrylate film of the present invention is preferably in the range of 15 μm to 120 μm. When the thickness is less than 15 μm, a great care should be taken during manufacturing and handling of the film to avoid its rupture. On the other hand, when the film thickness exceeds 120 μm, its mechanical stability is rather high and this, again, increases the risk that the film does not break during an attempt of an unauthorised label removal. Additionally, a high film thickness will result in a high thickness of the forgery prevention label comprising the same, which may be disadvantageous for aesthetical or other reasons. From the standpoint of having a good balance between the handling and flatness, the thickness of the polyalkyl(meth)acrylate film is preferably in the range of 30 μm to 90 μm, a range of 40 μm to 75 μm being even more preferred.

### Polyalkyl(meth)acrylates

As already mentioned above, the polyalkyl(meth)acrylate film of the present invention comprises from 30.0 wt.-% to 92.5 wt.-% of a polyalkyl(meth)acrylate, based on the weight of the polyalkyl(meth)acrylate film.

Polyalkyl(meth)acrylates are usually obtained by free-radical polymerization of mixtures which typically comprise an alkyl(meth)acrylate, typically methyl methacrylate (a), and at least one further (meth)acrylate (b). These mixtures generally comprise at least 50 wt.-%, preferably at least 60 wt.-%, particularly preferably at least 80 wt.-%, and even more preferably at least 90 wt.-%, based on the weight of the monomers, of methyl methacrylate (a). The amount of methyl methacrylate (a) generally used is from 50.0 wt.-% to 99.9 wt.-%, preferably from 80.0 wt.-% to 99.0 wt.-% and particularly preferably from 90.0 wt.-% to 99.0 wt.-%, based on the weight of monomers.

These mixtures for production of polyalkyl(meth)acrylates can also comprise other (meth)acrylates (b) copolymerizable with methyl methacrylate (a). The term *"(meth)acrylate"* as used herein is meant to encompass methacrylates, acrylates and mixtures thereof. (Meth)acrylates may derive from saturated alcohols, *e.g.* methyl acrylate, ethyl (meth)acrylate, propyl (meth)acrylate, n-butyl (meth)acrylate, *tert*-butyl (meth)acrylate, isobutyl (meth)acrylate, pentyl (meth)acrylate and 2-ethylhexyl (meth)acrylate; or from unsaturated alcohols, *e.g.* oleyl (meth)acrylate, 2-propynyl (meth)acrylate, allyl (meth)acrylate, vinyl (meth)acrylate; and also aryl (meth)acrylates, such as benzyl (meth)acrylate or phenyl (meth)acrylate, cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate; glycol di(meth)acrylates, such as 1,4-butanediol (meth)acrylate, (meth)acrylates of ether alcohols, *e.g.* tetrahydrofurfuryl (meth)acrylate, vinyloxyethoxyethyl (meth)acrylate; amides and nitriles of (meth)acrylic acid, *e.g.* N-(3-dimethylaminopropyl)(meth)acrylamide, *N*-(diethylphosphono)-(meth)acrylamide, 1-methacryloylamido-2-methyl-2-propanol; sulphur-containing methacrylates, such as ethylsulphinylethyl (meth)acrylate, 4-thiocyanatobutyl (meth)acrylate, ethylsulphonylethyl (meth)acrylate, thiocyanatomethyl (meth)acrylate, methylsulphinylmethyl (meth)acrylate, bis((meth)acryloyloxyethyl) sulphide; polyfunctional (meth)acrylates, such as trimethyloylpropane tri(meth)acrylate.

The amount of the (meth)acrylic comonomers (b) generally used is from 0.1 wt.-% to 50.0 wt.-%, preferably from 1.0 wt.-% to 20.0 wt.-% and particularly preferably from 1.0 wt.-% to 10.0 wt.-%, based on the weight of monomers, and the compounds here can be used individually or in the form of a mixture.

The polymerization reaction is generally initiated by known free-radical initiators. Among the preferred initiators are *inter alia* the azo initiators well known to persons skilled in the art, *e.g.* AIBN and 1,1-azobiscyclohexanecarbonitrile, and peroxy compounds, such as methyl ethyl ketone peroxide, acetylacetone peroxide, dilauryl peroxide, *tert*-butyl 2-ethylperhexanoate, ketone peroxide, methyl isobutyl ketone peroxide, cyclohexanone peroxide, dibenzoyl peroxide, *tert*-butyl peroxybenzoate, *tert*-butylperoxy isopropyl carbonate, 2,5-bis(2-ethylhexanoylperoxy)-2,5-dimethylhexane, *tert*-butyl 2-ethylperoxyhexanoate, *tert*-butyl 3,5,5-trimethylperoxyhexanoate, dicumyl peroxide, 1,1-bis(*tert*-butylperoxy)cyclohexane, 1,1-bis(*tert*-butylperoxy)-3,3,5-trimethylcyclohexane, cumyl hydroperoxide, *tert*-butyl hydroperoxide, bis(4-*tert*-butylcyclohexyl) peroxydicarbonate, mixtures of two or more of the abovementioned compounds with one another and mixtures of the abovementioned compounds with compounds that have not been mentioned but which can likewise form free radicals.

The compositions to be polymerized can comprise not only the methyl methacrylate (a) and the (meth)acrylates (b) described above but also other unsaturated monomers which are copolymerizable with methyl methacrylate and with the abovementioned (meth)acrylates. Among these are *inter alia* 1-alkenes, such as 1-hexene, 1-heptene; branched alkenes, such as vinylcyclohexane, 3,3-dimethyl-1-propene, 3-methyl-1-diisobutylene, 4-methyl-1-pentene; acrylonitrile; vinyl esters, such as vinyl acetate; styrene, substituted styrenes having an alkyl substituent in the side chain, *e.g.* α-methylstyrene and α-ethylstyrene, substituted styrenes having an alkyl substituent on the ring, *e.g.* vinyltoluene and *p*-methylstyrene, halogenated styrenes, such as monochlorostyrenes, dichlorostyrenes, tribromostyrenes and tetrabromostyrenes; heterocyclic vinyl compounds, such as 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, *N*-vinylpyrrolidone, 2-vinylpyrrolidone, *N*-vinylpyrrolidine, 3-vinylpyrrolidine, *N*-vinylcaprolactam, *N*-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles; vinyl ethers and isoprenyl ethers; maleic acid derivatives, such as maleic anhydride, methylmaleic anhydride, maleimide, methylmaleimide; and dienes, such as divinylbenzene.

The amount of these comonomers (c) generally used is from 0.0 wt.-% to 10.0 wt.-%, preferably from 0.0 wt.-% to 5.0 wt.-% and particularly preferably from 0.0 wt.-% to 2.0 wt.-%, based on the weight of monomers, and the compounds here can be used individually or in the form of a mixture.

Further preference is given to polyalkyl(meth)acrylates which are obtainable by polymerization of a composition having, as polymerizable constituents:

(a) from 50.0 wt.-% to 99.9 wt.-% of methyl methacrylate,

(b) from 0.1 wt.-% to 50.0 wt.-% of an acrylic acid ester of a C1-C4 alcohol,

(c) from 0.0 wt.-% to 10.0 wt.-% of monomers copolymerizable with the monomers (a) and (b).

In yet a further embodiment, preference is given to polyalkyl(meth)acrylates composed of from 85.0 wt.-% to 99.5 wt.% of methyl methacrylate and from 0.5 wt.-% to 15.0 wt.-% of methyl acrylate, the amounts here being based on 100 wt.-% of the polymerizable constituents. Particularly advantageous copolymers are those obtainable by copolymerization of from 90.0 wt.-% to 99.5 wt.-% of methyl methacrylate and from 0.5 wt.-% to 10.0 wt.-% of methyl acrylate, where the amounts are based on 100 wt.-% of the polymerizable constituents. For instance, the polyalkyl(meth)acrylates may comprise 91.0 wt.-% of methyl methacrylate and 9.0 wt.-% of methyl acrylate, 96.0 wt.-% of methyl methacrylate and 4.0 wt.-% of methyl acrylate or 99.0 wt.-% of methyl methacrylate and 1.0 wt.-% of methyl acrylate. The Vicat softening points VSP (ISO 306:2013, method B50) of said polyalkyl(meth)acrylates is typically at least 90°C, preferably from 95°C to 112°C.

The weight-average molar mass Mw of the employed polyalkyl(meth)acrylates is usually above 80 000 g/mol, determined by means of gel permeation chromatography (GPC with reference to PMMA as a calibration standard, as for all of the Mw determinations on the matrix PMMA and THF as an eluent), more preferably ≥ 120 000 g/mol. For the purposes of the invention, it is possible to achieve films of even better balanced mechanical properties if the weight-average molar mass Mw of polyalkyl(meth)acrylates is above 140 000 g/mol.

The weight-average molar mass Mw of the polyalkyl(meth)acrylates is generally in the range from 80 000 g/mol to 300 000 g/mol. Particularly advantageous mechanical properties are obtained from foils with polyalkyl(meth)acrylates having an average molar mass Mw in the range from 80 000 g/mol to 200 000 g/mol, preferably in the range from 100 000 g/mol to 180 000 g/mol, more preferably in the range from 120 000 g/mol to 180 000 g/mol, in each case determined by means of GPC against PMMA calibration standards and THF as an eluent.

In a particularly preferred embodiment, the polyalkyl(meth)acrylate has an average molar weight Mw of from 80 000 g/mol to 200 000 g/mol and is obtainable by polymerization of a composition whose polymerizable constituents comprise, based on the weight of the polymerisable composition:

(a) from 80.0 wt.-% to 99.0 wt.-% of methyl methacrylate, and

(b) from 1.0 wt.-% to 20.0 wt.-% of an acrylic acid ester of a C1-C4 alcohol.

Impact Modifiers

Impact modifiers for use in the present invention *per se* are well known and may have different chemical compositions and different polymer architectures. The impact modifiers may be crosslinked or thermoplastic. In addition, the impact modifiers may be in particulate form, as core-shell or as core-shell-shell particles. Typically, particulate impact modifiers have an average particle diameter between 20 nm and 500 nm, preferably between 50 nm and 450 nm, more preferably between 100 nm and 400 nm and most preferably between 150 nm and 350 nm. *"Particulate"* in this context means crosslinked impact modifiers which generally have a core-shell or core-shell-shell structure. Average particle diameter can be determined by a method known to a skilled person, e.g. by photon correlation spectroscopy according to the norm DIN ISO 13321:1996.

In the simplest case, the particulate impact modifiers are crosslinked particles obtained by means of emulsion polymerization whose average particle diameter is in the range from 10 nm to 150 nm, preferably from 20 nm to 100 nm, in particular from 30 nm to 90 nm. These are generally composed of at least 20.0 wt.-%, preferably from 20.0 wt.-% to 99.0 wt.-%, particularly preferably in the range from 30.0 wt.-% to 98.0 wt.-% of butyl acrylate, and from 0.1 wt.-% to 2.0 wt.-%, preferably from 0.5 wt.-% to 1.0 wt.-% of a crosslinking monomer, e.g. a polyfunctional (meth)acrylate, *e.g.* allyl methacrylate and, if appropriate, other monomers, e.g. from 0.0 wt.-% to 10.0 wt.-%, preferably from 0.5 wt.-% to 5.0 % wt.-%, of $C_1$-$C_4$-alkyl methacrylates, such as ethyl acrylate or butyl methacrylate, preferably methyl acrylate, or other vinylically polymerizable monomers, *e.g.* styrene.

Preferred impact modifiers are polymer particles which can have a two- or three-layer core-shell structure and are obtained by emulsion polymerization (see, for example, EP-A 0 113 924, EP-A 0 522 351, EP-A 0 465 049 and EP-A 0 683 028). The present invention typically requires suitable average particle diameter of these emulsion polymers in the range from 20 nm and 500 nm, preferably between 50 nm and 450 nm, more preferably between 150 nm and 400 nm and most preferably between 200 nm and 350 nm.

A three-layer or three-phase structure with a core and two shells can prepared as follows. The innermost (hard) shell can, for example, be composed in essence of methyl methacrylate, of small proportions of comonomers, *e.g.* ethyl acrylate, and of a proportion of crosslinking agent, *e.g.* allyl methacrylate. The middle (soft) shell can, for example, be composed of a copolymer comprising butyl acrylate and, if appropriate, styrene, while the outermost (hard) shell is in essence the same as the matrix polymer, thus bringing about compatibility and good linkage to the matrix.

The proportion of polybutyl acrylate in the core or in the shell of the impact modifier of a two- or three-layer core-shell structure is decisive for the impact-modifying action and is preferably in the range from 20.0 wt.-% to 99.0 wt.-%, particularly preferably in the range from 30.0 wt.-% to 98.0 wt.-%, even more preferably in the range from 40.0 wt.-% to 97.0 wt.-%, based on the total weight of the impact modifier.

In addition to particulate impact modifiers comprising copolymers of polybutyl acrylate, use of impact modifiers comprising siloxanes is also possible. However, use of such modifiers is less advantageous, because their presence in the polyalkyl(meth)acrylate film tends to be disadvantageous for printability of the film.

Thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

There are various classes of thermoplastic impact modifiers. One example thereof are aliphatic TPUs (thermoplastic polyurethanes) *e.g.* Desmopan® products commercially available from Covestro AG. For instance, the TPUs Desmopan® WDP 85784A, WDP 85092A, WDP 89085A and WDP 89051D, all of which have refractive indices between 1.490 and 1.500, are particularly suitable as impact modifiers.

A further class of thermoplastic polymers for use according in the foil of the present invention as impact modifiers are methacrylate-acrylate block copolymers, especially acrylic TPE, which comprises PMMA-poly-n-butyl acrylate-PMMA triblock copolymers, and which are commercially available under the Kurarity® product name by Kuraray. The poly-*n*-butyl acrylate blocks form nanodomains in the polymer matrix having a size between 10 nm and 20 nm.

In addition to thermoplastic impact modifiers described above, use of thermoplastic impact modifiers comprising PVDF is also possible. However, use of such modifiers is less advantageous, because their presence in the polyalkyl(meth)acrylate film tends to worsen the printability of the film.

Typically, the cumulative content of the polyalkyl(meth)acrylate and the impact modifier (hereinafter referred to as *"impact-modified* polyalkyl(meth)acrylate") in the polyalkyl(meth)acrylate film is from 60 wt.-% to 95 wt.-%, more preferably from 65.0 wt.-% to 90.0 wt.-%, even more preferably from 70.0 wt.-% to 85.0 wt.-%, yet even more preferably from 75.0 wt.-% to 80.0 wt.-%, based on the weight of the polyalkyl(meth)acrylate film.

Inorganic Fillers

The presence of the inorganic filler in the polyalkyl(meth)acrylate film of the present invention serves several purposes. It is due to the presence of inorganic fillers in the specified amounts that polyalkyl(meth)acrylate film has a rough surface with a non-glossy appearance and can be printed easily. The printing may be accomplished substantially by any method known in the prior art such as laser printing, inkjet printing, flexographic printing, digital printing or screen printing.

Furthermore, the presence of the inorganic fillers allows rendering the polyalkyl(meth)acrylate film to have a desired colour and degree of transparency. For instance, the presence of titanium dioxide in the polyalkyl(meth)acrylate film will render the film white and substantially non-transparent.

Finally, as already explained above, the amount of the inorganic filler was surprisingly found to have a strong effect on the film behaviour during its handling, in particular, the behaviour of the waste matrix after the kiss cutting step during manufacturing of forgery prevention labels.

To ensure a good handling of the polyalkyl(meth)acrylate film during preparation and its further use in the manufacturing of forgery prevention labels it is of utmost importance that the content, in wt.-%, of one or several impact modifiers $n_{im}$ in the polyalkyl(meth)acrylate film obeys the following relationship:

$$0.5^*n_f \leq n_{im} \leq n_f$$

$n_f$ being the content, in wt.-%, of one or several inorganic fillers in the polyalkyl(meth)acrylate film.

If the content of one or several impact modifiers $n_{im}$ in the polyalkyl(meth)acrylate film this lower than $0.5^*n_f$ the film, in principle, still will be suitable for use in a forgery prevention label. However, it would no longer be possible to produce a plurality of individual forgery prevention labels attached side-by-side to the support layer by a process involving kiss cutting the face layer and the PSA layer, and then removing the surrounding waste matrix, leaving the plurality of individual labels adhered to the support layer (release liner). Such attempts would likely result in rupture of the waste matrix.

On the other hand, if the content of one or several impact modifiers $n_{im}$ in the polyalkyl(meth)acrylate film is higher than the content of one or several inorganic fillers in the polyalkyl(meth)acrylate film $n_f$ the brittleness of the film will be rather low. As a consequence, the risk of an unauthorised removal of the forgery prevention label from the original substrate will significantly increase.

Furthermore, for the sake of achieving an even better balance between processability of the polyalkyl(meth)acrylate film and sensitivity of the resulting forgery prevention label it is particularly advantageous that the content, in wt.-%, of one or several impact modifiers $n_{im}$ in the polyalkyl(meth)acrylate film obeys the following relationship:

$$0.55^*n_f \leq n_{im} \leq 0.9^*n_f$$

$n_f$ being the content, in wt.-%, of one or several inorganic fillers in the polyalkyl(meth)acrylate film.

Furthermore, for the sake of achieving an even better balance between processability of the polyalkyl(meth)acrylate film and sensitivity of the resulting forgery prevention label it is particularly advantageous that the content, in wt.-%, of one or several impact modifiers $n_{im}$ in the polyalkyl(meth)acrylate film obeys the following relationship:

$$0.6^*n_f \leq n_{im} \leq 0.8^*n_f$$

$n_f$ being the content, in wt.-%, of one or several inorganic fillers in the polyalkyl(meth)acrylate film.

Inorganic fillers for use in the present invention are not particularly limited and can, for instance, be selected from titanium dioxide, zinc sulphide, silica, barium sulphate, aluminium trihydroxide or calcium carbonate or mixtures thereof.

Ideally, the inorganic fillers show a 45 $\mu$m screen residue of not more than 0.1 wt.-%, *i.e.* substantially no agglomerates with a particle size larger than 45 $\mu$m are present, which is highly advantageous for use according to the present invention. This allows the inorganic filler to be distributed in the matrix of poly(meth)acrylate film in a particularly homogeneous manner without large filler agglomerates being present so that the resulting film shows a substantially uniform visual appearance and has appropriate mechanical properties. Generally speaking, the presence of substantial amounts of larger filler agglomerates in the film is disadvantageous, since such agglomerates tend to initiate film cracks thereby reducing the initial tear strength at a random position of the film.

In a preferred embodiment, the inorganic fillers have a weight-average particle diameter $d_{50}$ ranging between 0.05 $\mu$m and 10.0 $\mu$m, more preferably between 0.1 $\mu$m and 5.0 $\mu$m, particularly preferably between 0.1 $\mu$m and 1.0 $\mu$m, even more preferably between 0.1 $\mu$m and 0.5 $\mu$m. The weight-average particle diameter $d_{50}$ can be determined by a method known to a skilled person, *e.g.* by photon correlation spectroscopy according to the norm DIN ISO 13321:1996 upon using a commercially available instrument such as N5 Submicron Particle Size Analyzer from Beckman Coulter Inc or SZ-10 Nanoparticle Analyzer from Horiba Scientific Ltd.

To ensure a good dispersibility of inorganic filler particles in the poly(meth)acrylate it is further advantageous that the oil absorption of the inorganic filler is not less than 5 g/100 g filler, preferably not less than 10 g/100 g filler and particularly preferably not less than 15 g/100 g filler. It is further advantageous that the oil absorption of the inorganic filler is not more than 100 g/100 g filler, preferably not more than 70 g/100 g filler and particularly preferably not more than 50 g/100 g filler. The oil absorption can be determined according to the norm DIN EN ISO 787-5:1980.

For instance, if a white colouring of the film is desired, titanium dioxide can be advantageously employed as a filler. Titanium dioxide in form of rutile or anatase may be used, whereby titanium dioxide in form of rutile is particularly preferred due to its low photocatalytic activity. Such material can be manufactured by chloride process and is commercially available from various suppliers such as *e.g.* KRONOS TITAN GmbH (Leverkusen, Germany).

Suitable titanium dioxide fillers may be with or without modifications with water-insoluble oxides of aluminium, silicon, zinc, or other agents; these reagent materials are introduced specifically to improve those properties for which the pigment is used. The titanium dioxide fillers should ideally be free of extenders such as barium sulphate, clay, magnesium silicate, whiting, etc. Particularly preferred are titanium dioxide fillers of types II, III and IV according to the classification ASTM D476-15.

UV absorbers and UV stabilizers

UV absorbers and UV stabilizers are well known and are described in detail by way of example in Hans Zweifel, Plastics Additives Handbook, Hanser Verlag, 5th Edition , 2001, p. 141 ff. Light stabilizers are understood to include UV absorbers, UV stabilizers and free-radical scavengers.

UV absorbers can by way of example derive from the group of the substituted benzophenones, salicylic esters, cinnamic esters, oxanilides, benzoxazinones, hydroxyphenylbenzotriazoles, triazines or benzylidenemalonate. The best-known representatives of the UV stabilizers/free-radical scavengers are provided by the group of the sterically hindered amines (hindered amine light stabilizer, HALS).

Advantageously, the combination of UV absorbers and UV stabilizers as used in the polyalkyl(meth)acrylate film is composed of the following components:

- component A: a UV absorber of benzotriazole type,
- component B: a UV absorber of triazine type,
- component C: a UV stabilizer (HALS compound).

The individual components can be used in the form of an individual substance or in a mixture.

Examples of UV absorbers of benzotriazole type (Component A) that can be used are 2-(2-hydroxy-5-methylphenyl)benzotriazole, 2-[2-hydroxy-3,5-di($\alpha,\alpha$-dimethylbenzyl)phenyl]-benzotriazole, 2-(2-hydroxy-3,5-di-*tert*-butylphenyl)benzotriazole, 2-(2-hydroxy-3,5-butyl-5-methylphenyl)-5-chlorobenzotriazole, 2-(2-hydroxy-3,5-di-*tert*-butylphenyl)-5-chlorobenzotriazole, 2-(2-hydroxy-3,5-di-*tert*-amylphenyl)benzotriazole, 2-(2-hydroxy-5-*tert*-butylphenyl)benzotriazole, 2-(2-hydroxy-3-sec-butyl-5-*tert*-butylphenyl)benzotriazole and 2-(2-hydroxy-5-*tert*-octylphenyl)benzotriazole, phenol, 2,2'-methylenebis[6-(2H-benzotriazol-2-yl)-4-(1,1,3,3-tetramethylbutyl)].

The amounts used of the UV absorbers of benzotriazole type are from 0.1 wt.-% to 5.0 wt.-%, preferably from 0.2 wt.-% to 3.0 wt.-% and very particularly preferably from 0.5 wt.-% to 2.0 wt.-%, based on the weight of the polyalkyl(meth)acrylate film. It is also possible to use mixtures of different UV absorbers of benzotriazole type.

Triazine type UV absorbers (Component B) such as 2-(4,6-diphenyl-1,3,5-triazin-2-yl)-5-hexyloxyphenol, are preferably used in combination with the Component A.

Detailed configuration of a line preferably used for producing the poly(meth)acrylate films used in accordance with the invention

The poly(meth)acrylate film used in accordance with the invention is preferably produced by means of an extrusion process. In contrast to a film produced by a solution coating process, an extruded poly(meth)acrylate film is substantially free of volatile organic compounds such as solvents, which is highly advantageous for toxicological and environmental reasons.

The above-described components of the polyalkyl(meth)acrylate film can be blended before or even during the extrusion step.

For extrusion of the polyalkyl(meth)acrylate film, a line having at least the following components can be used:

    an extruder,
    a melt pump,
    an optional melt filtration facility,
    an optional static mixing element,
    a flat film die,
    a polishing stack or chill roll, and
    a winder.

Extruding polymers into films is widely known and is described for example in Kunststoffextrusionstechnik II, Hanser Verlag, 1986, p. 125 ff.

In the method of the invention, a hot melt is extruded from the die of the extruder onto a nip between two polishing rolls or onto a chill roll. The optimum melt temperature is dependent, for example, on the composition of the mixture and may therefore vary within wide ranges. Preferred temperatures of the PMMA moulding composition up to the point of die entry are in the range from 150 to 300°C, more preferably in the range from 180°C to 270°C and very preferably in the range from 200°C to 260°C. The temperature of the polishing rolls is preferably less than or equal to 150°C, more preferably between 60°C and 140°C.

In one embodiment, the temperature of the die is higher than the temperature of the mixture prior to die entry. The die temperature is preferably set 10°C, more preferably 20°C and very preferably 30°C higher than the temperature of the mixture prior to die entry. Accordingly, preferred temperatures of the die are in the range from 160°C to 330°C, more preferably 190°C to 300°C.

The polishing stack may consist of two or three polishing rolls. Polishing rolls are widely known in the art and are used to obtain a high gloss. Nevertheless, rolls other than polishing rolls e.g. matt rolls can also be used in the method of the invention. The nip between the first two polishing rolls forms a sheet which becomes a film by virtue of the simultaneous cooling.

The chill rolls used alternatively are also known to the skilled person. Here, the sheet of melt may be deposited onto a single cooled roll, which transports it further. Chill rolls are preferably located over the polishing stacks.

Particularly good surface quality of the poly(meth)acrylate film can be ensured by the die and roll having chrome surfaces, and especially by these chrome surfaces having a roughness Ra (according to DIN 4768:1990) of less than 0.10 μm, preferably less than 0.08 μm.

To ensure that that the poly(meth)acrylate film is substantially free from impurities, a filter may be optionally located before the entry of the melt into the die. The mesh size of the filter is guided generally by the starting materials used, and may therefore vary within wide ranges. Mesh sizes generally are in the range from 300 μm to 20 μm. Filters having two or more screens of different mesh size may also be located before the point of die entry. These filters are available commercially. To obtain films of high quality, it is advantageous, moreover, to use particularly pure raw materials.

Optionally, furthermore, a static mixing element may be installed upstream of the flat film die. This mixing element can be used to mix components such as pigments, stabilizers or additives into the polymer melt, or up to 5 wt% of a second polymer, for example in the form of a melt, may be mixed from a second extruder into the poly(meth)acrylate.

The pressure with which the melted mixture is pressed into the die may be controlled, for example, via the speed of the screw. The pressure is typically within a range of from 40 bar to 150 bar, without this limiting the method of the invention. Accordingly, the speed with which the films can be obtained in accordance with the invention is generally greater than 5 m/min, more particularly greater than 10 m/min.

In order to ensure a particularly uniform conveying of the melt, a melt pump may additionally be installed upstream of the flat film die.

In order to additionally improve handling of the extruded polyalkyl(meth)acrylate film of the present invention, it is advantageous that a liner layer 5 is bound to the polyalkyl(meth)acrylate film 6 from the step i) downstream of the extruder at a temperature below the glass transition temperature of the polyalkyl(meth)acrylate, whereby a laminate 4 is obtained.

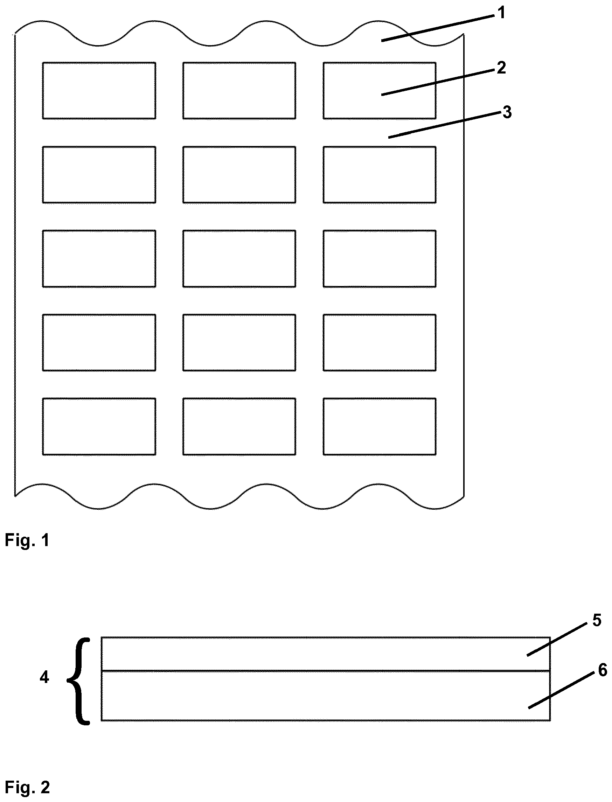

The resulting laminate 4 will typically consist of the following two layers (cf. Fig. 2):

- layer formed by the polyalkyl(meth)acrylate film **6**; and
- a liner layer **5**.

In one embodiment, the liner layer is self-adhesive. Such self-adhesive liner typically has an adhesive layer which can be advantageously used for binding the liner to polyalkyl(meth)acrylate films **6** having a matt surface.

In a further embodiment, the liner layer has a layer of a polyethylene-copolymer instead of an adhesive layer. Such liners are advantageously employed for for polyalkyl(meth)acrylate films **6** having a glossy surface.

In order to ensure a good mechanical stability and, in particular, a high tear strength of the laminate **4,** it is advantageous that the liner layer preferably has an initial tear resistance, measured according to ASTM D1004-13, of from 50 N to 500 N. The material of the liner layer is not particularly limited, as long as the liner layer has a sufficient tear resistance and can be selected from one of the following: polyethylene, polypropylene, polyethylene terephthalate or mixtures thereof, whereby a biaxially oriented polypropylene or a biaxially oriented polyethylene terephthalate are particularly preferred.

In the subsequent process steps, the laminate will undergo a step of binding an adhesive layer, optionally, a release coating layer and a support layer to deliver a label stock. These process steps are well-known to a skilled person and are explained in detail e.g. in patent applications US 2004/0091657 A1 and US 2011/0132522 A1.

Typically, the adhesive layer substantially consists of a pressure sensitive adhesive (PSA). The support layer typically comprises a paper or plastic film material and may be coated by release coating layer. Various release coating compositions are known such as those described US 6,406,787. Non-PSA adhesive compositions may also be used particularly for embodiments wherein the form support layer is porous (e.g. paper), the form substrate being exposed on the non-viewing surface of the label.

PSAs suitable in the present invention are preferably selected from the group consisting of alkylacrylate polymers and copolymers; copolymers of alkylacrylates with acrylic acid; terpolymers of alkylacrylates, acrylic acid, and vinyl-lactates; alkyl vinyl ether polymers and copolymers; polyisoalkylenes; polyalkyldienes; alkyldiene-styrene copolymers; styrene-isoprene-styrene block copolymers; polydialkylsiloxanes; polyalkylphenylsiloxanes; natural rubbers; synthetic rubbers; chlorinated rubbers; latex crepe; rosin; cumarone resins; alkyd polymers; and polyacrylate esters and mixtures thereof. Examples include polyisobutylenes, polybutadienes, or butadiene-styrene copolymers, and mixtures thereof (such polymers and copolymers preferably have no reactive moieties, *i.e.* are not oxidized in the presence of air); silicone-based compounds such as polydimethylsiloxane, and polymethylphenylsiloxane combined with other resins and/or oils.

Other suitable PSAs also include tackified thermoplastic resins and tackified thermoplastic elastomers, wherein the tackifier comprises one or more compounds which increases the tack of the composition. An example of a tackified thermoplastic resin useful as an aggressively PSA is the combination of a vinyl acetate/ethylene copolymer known under the trade designation VYNATHENE EY 902-30 (available from Quantum Chemicals, Cincinnati, Ohio) with substantially equal portions of the tackifiers known under the trade designations PICCOTEX LC (a water-white thermoplastic resin produced by copolymerization of vinyltoluene and alpha-methylstyrene monomers having a ring and ball softening point of about 87°C to 95°C, available from Hercules Incorporated, Wilmington, Del.) and WINGTACK 10 (a liquid aliphatic C-5 petroleum hydrocarbon resin available from Goodyear Chemical) and an organic solvent such as toluene. An example of a tackified thermoplastic elastomer useful as an aggressively PSA is the combination of the styrene-poly(ethylene-butylene)-styrene block copolymer known under the trade designation KRATON G1657 (available from of Shell Chemicals) with one or more of the low molecular weight hydrocarbon resins known under the trade designation REGALREZ (from Hercules) and an organic solvent such as toluene. Both of these formulations may be coated using a knife coater and air-dried, or air-dried followed by oven drying. Of course, the invention is not limited to use of these specific combinations of thermoplastic resins, thermoplastic elastomers, and tackifiers.

Some presently preferred PSAs exhibit extended shelf life and resistance to detackifying under atmospheric conditions, and include acrylic-based copolymer adhesives as disclosed in U.S. Pat. No. Re 24,906. One example of such an acrylic-based copolymer is a 95.5 : 4.5 (measured in parts by weight of each) isooctylacrylate/acrylic acid copolymer. Another preferred adhesive is the copolymer of a 90 : 10 weight ratio combination of these two monomers. Yet other preferred adhesives are terpolymers of ethyl acrylate, butyl acrylate, and acrylic acid; copolymers of isooctylacrylate and acrylamide; and terpolyrmers of isooctylacrylate, vinyl-acetate, and acrylic acid.

Acrylic-based PSAs can be coated out of a coatable composition comprising an organic solvent, such as a heptane:isopropanol solvent mixture, and the solvent subsequently evaporated, leaving a pressure-sensitive adhesive coating. This layer is preferably from about 0.038 centimeters (cm) to about 0.11 cm (5 to 15 mils) thick when the substrate is a retroreflective sheeting material.

PSAs useful in the invention also may be characterized by having *"180°C peel adhesion"* ranging from about 10 to about 1000 g/cm, more preferably at least about 50 g/cm. For aggressive PSAs the 180 °C peel adhesion typically ranges from about 200 g/cm to about 600 g/cm, measured using a standard test procedure. In this procedure, the force necessary to remove (i.e. peel) a PSA-coated substrate from a test substrate when the PSA-coated substrate is peeled from the test substrate is termed the *"peel adhesion"* value. A standard glass plate is cleaned using a solvent (such as one wash of diacetone alcohol followed by three washes of n-heptane). With very light tension, a sample having a PSA-backsize coating is then applied along the center of the standard glass plate, PSA side down. The sample is then rolled once with a 2.04 kg hand roller. The standard glass plate is then secured to a horizontal platen in a standard peel adhesion tester such as that known under the trade name "IMASS." One end of the sample is then attached to a hook which is a part of the peel adhesion tester. The sample is peeled from the standard glass plate at a 180 °C angle (i.e., one end of the sample is pulled toward the other end) by moving the platen horizontally at a speed of 228.6 cm/min, and the force required recorded, in g/cm of sample width, for various dwell times.

The release coating layer **8**, which is typically a siloxane coating, serves the purpose of reducing the adhesion between the adhesive layer **7** and the support layer **9**. Typically, the release coating layer **8** allows to achieve a kinetic coefficient of friction below 0.35, preferably below 0.25, determined according to the norm ASTM D1894-14.

Finally, the label stock will undergo a kiss cutting to form a plurality of individual self-adhesive forgery prevention labels bound to a support layer **9**. The kiss cutting may be performed by means of a mechanical die cutting as described in US 2011/0132522 A1 or by using a laser. In the subsequent step, the waste matrix surrounding the individual self-adhesive forgery prevention labels will be peeled off from the support layer without any risk of rupture.

To minimise a waste formation, the distance between individual labels (i.e. the width of the stripes in the waste matrix) is kept in the range of from 1.0 mm to 10.0 mm, more preferably from 2.0 mm to 8.0 mm, even more preferably from 3.0 mm to 5.0 mm. As explained above, no undesired waste matrix rupture takes place. Typically, the release force during this operation is below 30 g/inch, preferably below 20 g/inch, even more preferably from 1 g/inch to 10 g/inch, measured using T-peel test with a 7475 tape from TESA.

## Forgery prevention labels

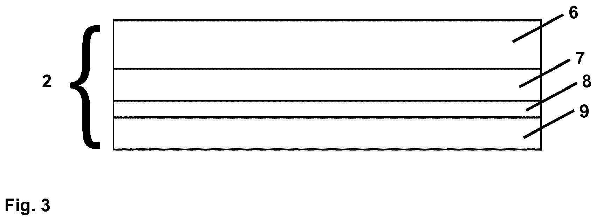

Forgery prevention label **2** of the present invention comprise at least the following layers in the order stated (*cf.* Fig. 3):

> a) a layer **6** consisting of extruded polyalkyl(meth)acrylate film as described above;
> b) an adhesive layer **7**;
> c) a release coating layer **8**, and
> d) a support layer **9**.

Typically, the forgery prevention label the present invention has a thickness of between 50 $\mu$m and 300 $\mu$m, more preferably between 100 $\mu$m and 200 $\mu$m.

In a typical embodiment,

- the PMMA layer **6** may have a thickness of from 20 $\mu$m to 100 $\mu$m, more preferably of from 30 $\mu$m to 75 $\mu$m, even more preferably of from 40 $\mu$m to 60 $\mu$m;
- the adhesive layer **7** may have a thickness of from 10 $\mu$m to 40 $\mu$m, more preferably of from 20 $\mu$m to 30 $\mu$m;
- the release coating layer **8** may have a thickness of from 0.01 $\mu$m to 1.5 $\mu$m, preferably of from 0.5 $\mu$m to 1.2 $\mu$m, more preferably of 0.6 $\mu$m to 0.8 $\mu$m; and
- the support layer **9** may have a thickness of from 20 $\mu$m to 70 $\mu$m, preferably of from 30 $\mu$m to 50 $\mu$m;

The size of the forgery prevention labels can in principle be freely selected and is only limited in by the dimension extrusion die and/or the polishing stack used for their production. This means that the formats are substantially freely selectable.

The trimming and kiss cutting of the poly(meth)acrylate film is preferably accomplished by means of die cutting, cutting, laser cutting or laser die cutting. Particular preference is given to laser cutting or laser die cutting.

Optionally, but not necessarily, the poly(meth)acrylate films produced in accordance with the invention may be provided additionally with ridges, cuts, slits or perforation or notches in order to additionally facilitate destruction of the labels during an attempt of their non-authorised removal. However, such additional means are not essential.

The forgery prevention labels are highly suitable for producing chip cards, documents, forgery prevention labels, other labels or price tags. One illustrative example of the use is that, for example, of toll stickers which are mounted on the inside of the vehicle screen. As a further example, the forgery prevention label of the present invention bearing a photograph of an individual can be used in documents such as identity cards or passports. The label bearing the photograph will become destroyed upon an unauthorised attempt to peel it off from the passport in order to transfer it to a different passport.

## Examples

### Example 1 (comparative)

A polyalkyl(meth)acrylate film having a total thickness of 50 $\mu$m was prepared using a compounded mixture of the following composition:

> a) 20.0 wt.-% of a material comprising 47 wt.-% of a butylacrylat-based acrylic core-shell-shell impact modifier,
> b) 58.94 wt.-% of PLEXIGLAS® 7N, available from Evonik Performance Materials GmbH, and
c) 21.06 wt.-% of titanium dioxide, available from KRONOS TITAN GmbH

The extrusion was carried out at the extrusion speed of 7.3 m/min using a 35 mm-diameter single screw extruder and a 25 mm-diameter single screw co-extruder MX 10 from Dr. Collin GmbH (Ebersberg, Germany) under the following conditions:

Screw temperature in the extruder: 240°C to 270°C
Die temperature: 240°C to 260°C
Temperature of the melt at the die: 240°C to 260°C
Roll temperature: 50°C to 120°C

The extruded polyalkyl(meth)acrylate film had elongation at break below 5%.
Subsequently, the extruded polyalkyl(meth)acrylate film was used for the preparation of self-adhesive forgery prevention labels upon using a label manufacturing machine MPS EF Flexo from MPS Systems B.V. (Arnhem, The Netherlands).
After the kiss cutting step of the label stock, an attempt to remove the waste matrix from the support layer failed. The waste matrix ruptured. The distance between individual labels was 3 mm to 5 mm.
The amount of impact modifier in the polyalkyl(meth)acrylate film was about 9.4 wt.-% *i.e.* less than 1/2 of the amount of titanium dioxide. The example shows that such a low amount of impact modifier has a negative effect on the properties of the waste matrix during the waste matrix stripping step.
Hence, the attempt to prepare a plurality of individual self-adhesive forgery prevention labels failed.

Example 2 (inventive)

A polyalkyl(meth)acrylate film having a total thickness of 50 μm was prepared using a compounded mixture of the following composition:

a) 30.0 wt.-% of a material comprising 47 wt.-% of a butylacrylat-based acrylic core-shell-shell impact modifier,
b) 48.67 wt.-% of PLEXIGLAS® 7N, available from Evonik Performance Materials GmbH, and
c) 21.33 wt.-% of titanium dioxide, available from KRONOS TITAN GmbH

The extrusion was carried out under the same conditions as in Example 1.
The extruded polyalkyl(meth)acrylate film had elongation at break of 4 to 6%.
Subsequently, the extruded polyalkyl(meth)acrylate film was used for the preparation of self-adhesive forgery prevention labels upon using a label manufacturing machine MPS EF Flexo from MPS Systems B.V. (Arnhem, The Netherlands).

In contrast to the extruded polyalkyl(meth)acrylate film of Example 1, the extruded polyalkyl(meth)acrylate film of Example 2 could be successfully used for the manufacturing of self-adhesive forgery prevention labels. No undesired rupture of the waste matrix took place.
The tear resistance tests were carried out using a testing system Zwick Roell Z005, available from Zwick GmbH & Co.KG (Ulm, Germany) with 4 identical samples, wherein 5 tests were carried out for each sample.
The initial tear resistance, measured using samples having a width of from 10 mm to 20 mm according to the norm ASTM D1004-13 in the direction of extrusion of the films was 5.8 N to 7.0 N.
The resistance to tear propagation, measured using 25 mm wide samples according to the norm ASTM D1938-14 in the direction of extrusion of the films, was 0.03 N.
The amount of the impact modifier in the polyalkyl(meth)acrylate film was about 14.1 wt.-% i.e. in accordance with the present invention.

**Claims**

1. A forgery prevention label comprising a polyalkyl(meth)acrylate film, wherein the polyalkyl(meth)acrylate film comprises:

from 30.0 wt.-% to 92.5 wt.-% of a polyalkyl(meth)acrylate;
from 2.5 wt.-% to 40.0 wt.-% of one or several impact modifiers;
from 5.0 wt.-% to 40.0 wt.-% of one or several inorganic fillers;
from 0.0 wt.-% to 5.0 wt.-% of one or several UV-absorbers; and
from 0.0 wt.-% to 5.0 wt.-% of one or several UV-stabilizers, based on the weight of the polyalkyl(meth)acrylate film;

wherein the cumulative content of the polyalkyl(meth)acrylate and the impact modifier is from 60.0 wt.-% to 95.0 wt.-%, based on the weight of the polyalkyl(meth)acrylate film; and the content, in wt.-%, of one or several impact modifiers $n_{im}$ in the polyalkyl(meth)acrylate film is described by the following relationship:

$$0.5^{*}n_f \leq n_{im} \leq n_f$$

$n_f$ being the content, in wt.-%, of one or several inorganic fillers in the polyalkyl(meth)acrylate film.

2. Forgery prevention label according to Claim 1, wherein the polyalkyl(meth)acrylate has an average molar weight Mw of from 50 000 g/mol to 300 000 g/mol and is obtainable by polymerization of a composition whose polymerizable constituents comprise, based on the weight of the polymerisable composition:

(a) from 50.0 wt.-% to 99.9 wt.-% of methyl methacrylate,
(b) from 0.1 wt.-% to 50.0 wt.-% of an acrylic acid ester of a C1-C4 alcohol,
(c) from 0.0 wt.-% to 10.0 wt.-% of at least one further monomer copolymerizable with the monomers (a) and (b).

3. Forgery prevention label according to Claim 1 or 2, wherein the polyalkyl(meth)acrylate film has thickness of from 15 $\mu$m to 120 $\mu$m, and elongation at break, measured according to ASTM D1004-13, of from 0.5% to 15%, and initial tear resistance, measured according to ASTM D1004-13, of from 0.1 N to 30.0 N.

4. Forgery prevention label according to at least one of Claims 1 to 3, wherein the polyalkyl(meth)acrylate film has resistance to tear propagation, measured according to ASTM D1938-14, of from 0.01 N to 1.00 N.

5. Forgery prevention label according to at least one of Claims 1 to 4, wherein the content, in wt.-%, of one or several impact modifiers $n_{im}$ in the polyalkyl(meth)acrylate film is described by the following relationship:

$$0.6{*}n_f \leq n_{im} \leq 0.8{*}n_f$$

$n_f$ being the content, in wt.-%, of one or several inorganic fillers in the polyalkyl(meth)acrylate film.

6. Forgery prevention label according to at least one of Claims 1 to 5, **characterized in that** the one or several inorganic fillers are selected from titanium dioxide, silica, barium sulphate, aluminium trihydroxide or calcium carbonate.

7. Forgery prevention label according to at least one of Claims 1 to 6, **characterized in that** the polyalkyl(meth)acrylate has an average molar weight Mw of from 80 000 g/mol to 200 000 g/mol and is obtainable by polymerization of a composition whose polymerizable constituents comprise, based on the weight of the polymerisable composition:

(a) from 80.0 wt.-% to 99.0 wt.-% of methyl methacrylate, and
(b) from 1.0 wt.-% to 20.0 wt.-% of an acrylic acid ester of a C1-C4 alcohol.

8. Forgery prevention label according to at least one of Claims 1 to 7, **characterized in that** the forgery prevention label comprises at least the following layers in the order stated:

a) a layer consisting of the polyalkyl(meth)acrylate film as defined in at least one of Claims 1 to 7, preferably having a thickness of from 40 $\mu$m to 60 $\mu$m;
b) an adhesive layer, preferably having a thickness of from 20 $\mu$m to 30 $\mu$m;
c) a release coating layer, preferably having a thickness of from 0.6 $\mu$m to 0.8 $\mu$m; and
d) a support layer, preferably having a thickness of from 30 $\mu$m to 50 $\mu$m;

and/or the forgery prevention label has a thickness of between 80 $\mu$m and 300 $\mu$m.

9. Laminate for the manufacturing of a forgery prevention label according to at least one of Claims 1 to 8, the laminate comprising at least the following layers:

a) a liner layer preferably having initial tear resistance, measured according to ASTM D1004-13, of from 50 N to 500 N;
b) a layer consisting of the polyalkyl(meth)acrylate film as specified in at least one of Claims 1 to 7.

10. Laminate according to Claim 9, wherein the liner layer substantially consists of a polymeric material selected from the group consisting of polyethylene, polypropylene and polyethylene terephthalate, preferably a biaxially oriented polypropylene or a biaxially oriented polyethylene terephthalate.

11. Process for the manufacturing of a laminate as specified in Claim 9 or 10, the process comprising at least the following steps:

i) preparation of a polyalkyl(meth)acrylate film according to at least one of Claims 1 to 7 using an extruder, wherein the polyalkyl(meth)acrylate film is obtained; and
ii) binding a liner layer to the polyalkyl(meth)acrylate film from the step i) downstream of the extruder.

12. Process according to Claim 11, wherein the laminate obtained in step ii) is passed between a plurality of rolls, wherein at least a roll facing towards the side of the polyalkyl(meth)acrylate film is a cooled roll.

13. Process for the manufacturing of a forgery prevention label according to at least one of Claims 1 to 8, the process comprising at least the following steps:

i) preparation of a polyalkyl(meth)acrylate film according to at least one of Claims 1 to 7 using an extruder; and

ii) binding a liner layer to the polyalkyl(meth)acrylate film from the step i) downstream of the extruder, wherein a laminate is obtained;

iii) binding an adhesive layer, optionally, a release coating layer and a support layer onto the laminate from step ii), wherein a label stock is obtained;

iv) kiss cutting the label stock obtained in the step iii) and removing the resulting waste matrix, wherein a plurality of individual self-adhesive forgery prevention labels on a support layer is obtained.

14. Use of forgery prevention labels according to at least one of Claims 1 to 8 for the manufacturing of chip cards, documents, forgery prevention labels, other labels or price tags.


**Patentansprüche**

1. Fälschungssicheres Etikett, umfassend einen Polyalkyl(meth)acrylatfilm, wobei der Polyalkyl(meth)acrylatfilm umfasst:

von 30,0 Gew.-% bis 92,5 Gew.-% an einem Polyalkyl(meth)acrylat;
von 2,5 Gew.-% bis 40,0 Gew.-% an einem oder mehreren Schlagzähmodifizierungsmitteln;
von 5,0 Gew.-% bis 40,0 Gew.-% an einem oder mehreren anorganischen Füllstoffen;
von 0,0 Gew.-% bis 5,0 Gew.-% an einem oder mehreren UV-Absorbern; und
von 0,0 Gew.-% bis 5,0 Gew.-% an einem oder mehreren UV-Stabilisatoren, bezogen auf das Gewicht des Polyalkyl(meth)acrylatfilms;
wobei der kumulative Gehalt an dem Polyalkyl(meth)acrylat und dem Schlagzähmodifizierungsmittel von 60,0 Gew.-% bis 95,0 Gew.-%, bezogen auf das Gewicht des Polyalkyl(meth)acrylatfilms, beträgt; und
der Gehalt in Gew.-% an einem oder mehreren Schlagzähmodifizierungsmitteln $n_{im}$ in dem Polyalkyl(meth)acrylatfilm durch die folgende Beziehung beschrieben wird:

$$0,5 * n_f \le n_{im} \le n_f$$

wobei $n_f$ der Gehalt in Gew.-% an einem oder mehreren anorganischen Füllstoffen in dem Polyalkyl(meth)acrylatfilm ist.

2. Fälschungssicheres Etikett gemäß Anspruch 1, wobei das Polyalkyl(meth)acrylat ein mittleres Molekulargewicht Mw von 50.000 g/mol bis 300.000 g/mol aufweist und durch Polymerisation einer Zusammensetzung erhältlich ist, deren polymerisierbare Bestandteile, bezogen auf das Gewicht der polymerisierbaren Zusammensetzung, umfassen:

(a) von 50,0 Gew.-% bis 99,9 Gew.-% Methylmethacrylat,
(b) von 0,1 Gew.-% bis 50,0 Gew.-% an einem Acrylsäureester eines C1-C4-Alkohols,
(c) von 0,0 Gew.-% bis 10,0 Gew.-% an wenigstens einem weiteren Monomer, das mit den Monomeren (a) und (b) copolymerisierbar ist.

3. Fälschungssicheres Etikett gemäß Anspruch 1 oder 2, wobei der Polyalkyl(meth)acrylatfilm eine Dicke von 15 μm bis 120 μm und
eine Bruchdehnung, gemessen gemäß ASTM D1004-13, von 0,5 % bis 15 % und
eine Anfangsreißfestigkeit, gemessen gemäß ASTM D1004-13, von 0,1 N bis 30,0 N aufweist.

4. Fälschungssicheres Etikett gemäß wenigstens einem der Ansprüche 1 bis 3, wobei der Polyalkyl(meth)acrylatfilm eine Weiterreißfestigkeit, gemessen gemäß ASTM D1938-14, von 0,01 N bis 1,00 N aufweist.

5. Fälschungssicheres Etikett gemäß wenigstens einem der Ansprüche 1 bis 4, wobei der Gehalt in Gew.-% an einem oder mehreren Schlagzähmodifizierungsmitteln $n_{im}$ in dem Polyalkyl(meth)acrylatfilm durch die folgende Beziehung beschrieben wird:

$$0,6 * n_f \le n_{im} \le 0,8 * n_f$$

wobei $n_f$ der Gehalt in Gew.-% an einem oder mehreren anorganischen Füllstoffen in dem Polyalkyl(meth)acrylatfilm ist.

6. Fälschungssicheres Etikett gemäß wenigstens einem der Ansprüche 1 bis 5, **dadurch gekennzeichnet, dass** der eine oder die mehreren anorganischen Füllstoffe ausgewählt sind aus Titandioxid, Siliciumdioxid, Bariumsulfat, Aluminiumtrihydroxid und Calciumcarbonat.

7. Fälschungssicheres Etikett gemäß wenigstens einem der Ansprüche 1 bis 6, **dadurch gekennzeichnet, dass** das Polyalkyl(meth)acrylat ein mittleres Molekulargewicht Mw von 80.000 g/mol bis 200.000 g/mol aufweist und durch Polymerisation einer Zusammensetzung erhältlich ist, deren polymerisierbare Bestandteile, bezogen auf das Gewicht der polymerisierbaren Zusammensetzung, umfassen:

(a) von 80,0 Gew.-% bis 99,0 Gew.-% Methylmethacrylat und

(b) von 1,0 Gew.-% bis 20,0 Gew.-% an einem Acrylsäureester eines C1-C4-Alkohols.

8. Fälschungssicheres Etikett gemäß wenigstens einem der Ansprüche 1 bis 7, **dadurch gekennzeichnet, dass** das fälschungssichere Etikett wenigstens die folgenden Schichten in der angegebenen Reihenfolge umfasst:

a) eine Schicht, die aus dem Polyalkyl(meth)acrylatfilm gemäß wenigstens einem der Ansprüche 1 bis 7 besteht, vorzugsweise mit einer Dicke von 40 μm bis 60 μm;
b) eine Klebstoffschicht, vorzugsweise mit einer Dicke von 20 μm bis 30 μm;
c) eine Ablöseschicht, vorzugsweise mit einer Dicke von 0,6 μm bis 0,8 μm; und
d) eine Trägerschicht, vorzugsweise mit einer Dicke von 30 μm bis 50 μm;

und/oder das fälschungssichere Etikett eine Dicke von zwischen 80 μm bis 300 μm aufweist.

9. Laminat zur Herstellung eines fälschungssicheren Etiketts gemäß wenigstens einem der Ansprüche 1 bis 8, wobei das Laminat wenigstens die folgenden Schichten umfasst:

a) eine Linerschicht mit einer Anfangsreißfestigkeit, gemessen gemäß ASTM D1004-13, von 50 N bis 500 N;
b) eine Schicht, die aus dem Polyalkyl(meth)acrylatfilm gemäß wenigstens einem der Ansprüche 1 bis 7 besteht.

10. Laminat gemäß Anspruch 9, wobei die Linerschicht im Wesentlichen aus einem Polymermaterial ausgewählt ist aus der Gruppe bestehend aus Polyethylen, Polypropylen und Polyethylenterephthalat besteht, vorzugsweise einem biaxial orientierten Polypropylen oder einem biaxial orientierten Polyethylenterephthalat.

11. Verfahren zur Herstellung eines Laminats gemäß Anspruch 9 oder 10, wobei das Verfahren wenigstens folgende Schritte umfasst:

i) Herstellen eines Polyalkyl(meth)acrylatfilms gemäß wenigstens einem der Ansprüche 1 bis 7 unter Verwendung eines Extruders, wobei der Polyalkyl(meth)acrylatfilm erhalten wird; und
ii) Binden einer Linerschicht an den Polyalkyl(meth)acrylatfilm aus dem Schritt i) stromabwärts bezogen auf den Extruder.

12. Verfahren gemäß Anspruch 11, wobei das in dem Schritt ii) erhaltene Laminat zwischen einer Vielzahl von Walzen geführt wird, wobei wenigstens eine zu der Seite des Polyalkyl(meth)acrylatfilms gerichtete Walze eine gekühlte Walze ist.

13. Verfahren zur Herstellung eines Fälschungssicheres Etiketts gemäß wenigstens einem der Ansprüche 1 bis 8, wobei das Verfahren wenigstens folgende Schritte umfasst:

i) Herstellen eines Polyalkyl(meth)acrylatfilms gemäß wenigstens einem der Ansprüche 1 bis 7 unter Verwendung eines Extruders; und
ii) Binden einer Linerschicht an den Polyalkyl(meth)acrylatfilm aus dem Schritt i) stromabwärts bezogen auf den Extruder, wobei ein Laminat erhalten wird;
iii) Binden einer Klebstoffschicht, gegebenenfalls einer Ablöseschicht und einer Trägerschicht an das Laminat aus dem Schritt ii), wobei ein Etikettenmaterial erhalten wird;
iv) Andruckschneiden (kiss cutting) des bei dem Schritt iii) erhaltenen Etikettenmaterials und Entfernen der erhaltenen Abfallmatrix, wobei eine Vielzahl von einzelnen selbsthaftenden fälschungssicheren Etiketten auf einer Trägerschicht erhalten wird.

14. Verwendung von fälschungssicheren Etiketten gemäß wenigstens einem der Ansprüche 1 bis 8 für die Herstellung von Chipkarten, Dokumenten, fälschungssicheren Etiketten, sonstigen Etiketten oder Preisschildern.

**Revendications**

1. Étiquette de prévention de contrefaçon comprenant un film de polyalkyl(méth)acrylate, dans laquelle le film de polyalkyl(méth)acrylate comprend :

de 30,0 % en poids à 92,5 % en poids d'un polyalkyl(méth)acrylate ;
de 2,5 % en poids à 40,0 % en poids d'un ou plusieurs modificateurs de résistance aux chocs ;
de 5,0 % en poids à 40,0 % en poids d'une ou plusieurs charges inorganiques ;
de 0,0 à 5,0 % en poids d'un ou plusieurs absorbeurs d'UV ; et
de 0,0 à 5,0 % en poids d'un ou plusieurs stabilisateurs aux UV, relativement au poids du film de polyalkyl(méth)acrylate ;
dans laquelle la teneur cumulative en polyalkyl(méth)acrylate et en modificateur de résistance aux chocs est de 60,0 % en poids à 95,0 % en poids, relativement au poids du film de polyalkyl(méth)acrylate ; et
la teneur, en pourcentage pondéral, en un ou plusieurs modificateurs de résistance aux chocs

$n_{im}$ dans le film de polyalkyl(méth)acrylate est décrite par la relation suivante :

$$0,5*n_f \leq n_{im} \leq n_f$$

$n_f$ étant la teneur, en pourcentage pondéral, en une ou plusieurs charges inorganiques dans le film de polyalkyl(méth)acrylate.

2. Étiquette de prévention de contrefaçon selon la revendication 1, dans laquelle le polyalkyl(méth)acrylate a une masse molaire moyenne Mw de 50 000 g/mol à 300 000 g/mol et peut être obtenu par polymérisation d'une composition dont les constituants polymérisables comprennent, relativement au poids de la composition polymérisable :

   (a) de 50,0 % en poids à 99,9 % en poids de méthacrylate de méthyle,
   (b) de 0,1 % en poids à 50,0 % en poids d'un ester d'acide acrylique d'un alcool $C_1$-$C_4$,
   (c) de 0,0 à 10,0 % en poids d'au moins un monomère supplémentaire copolymérisable avec les monomères (a) et (b).

3. Étiquette de prévention de contrefaçon selon la revendication 1 ou 2, dans laquelle le film de polyalkyl(méth)acrylate a une épaisseur de 15 μm à 120 μm, et
   un *allongement* à la rupture, mesuré selon ASTM D1004-13, de 0,5 % à 15 %, et
   une résistance à la déchirure initiale, mesurée selon ASTM D1004-13, de 0,1 N à 30,0 N.

4. Étiquette de prévention de contrefaçon selon au moins l'une des revendications 1 à 3, dans laquelle le film de polyalkyl(méth)acrylate a une résistance à la propagation de la déchirure, mesurée selon la norme ASTM D1938-14, de 0,01 N à 1,00 N.

5. Étiquette de prévention de contrefaçon selon au moins l'une des revendications 1 à 4, dans laquelle la teneur, en pourcentage pondéral, en un ou plusieurs modificateurs de résistance aux chocs $n_{im}$ dans le film de polyalkyl(méth)acrylate est décrite par la relation suivante :

$$0,6*n_f \leq n_{im} \leq 0,8*n_f$$

$n_f$ étant la teneur, en pourcentage pondéral, en une ou plusieurs charges inorganiques dans le film de polyalkyl(méth)acrylate.

6. Étiquette de prévention de contrefaçon selon au moins l'une des revendications 1 à 5, **caractérisée en ce que** lesdites une ou plusieurs charges inorganiques sont sélectionnées parmi le dioxyde de titane, la silice, le sulfate de baryum, le trihydroxyde d'aluminium ou le carbonate de calcium.

7. Étiquette de prévention de contrefaçon selon au moins l'une des revendications 1 à 6, **caractérisée en ce que** le polyalkyl(méth)acrylate a une masse molaire moyenne Mw de 80 000 g/mol à 200 000 g/mol et peut être obtenu par polymérisation d'une composition dont les constituants polymérisables comprennent, relativement au poids de la composition polymérisable :

   (a) de 80,0 % en poids à 99,0 % en poids de méthacrylate de méthyle, et
   (b) de 1,0 % en poids à 20,0 % en poids d'un ester d'acide acrylique d'un alcool $C_1$-$C_4$.

8. Étiquette de prévention de contrefaçon selon au moins l'une des revendications 1 à 7, **caractérisée en ce que** l'étiquette de prévention de contrefaçon comprend au moins les couches suivantes dans l'ordre indiqué :

   a) une couche constituée du film de polyalkyl(méth)acrylate tel que défini dans au moins l'une des revendications 1 à 7, ayant préférablement une épaisseur de 40 μm à 60 μm ;
   b) une couche d'adhésif, ayant préférablement une épaisseur de 20 μm à 30 μm ;
   c) une couche de revêtement anti-adhésif, ayant préférablement une épaisseur de 0,6 μm à 0,8 μm ; et
   d) une couche de support, ayant préférablement une épaisseur de 30 μm à 50 μm ;

   et/ou l'étiquette de prévention de contrefaçon a une épaisseur de 80 μm à 300 μm.

9. Stratifié destiné à la fabrication d'une étiquette de prévention de contrefaçon selon au moins l'une des revendications 1 à 8, le stratifié comprenant au moins les couches suivantes :

   a) une couche de couverture ayant préférablement une résistance initiale à la déchirure, mesurée selon ASTM D1004-13, de 50 N à 500 N ;
   b) une couche constituée du film de polyalkyl(méth)acrylate tel que défini dans au moins l'une des revendications 1 à 7.

10. Stratifié selon la revendication 9, dans lequel la couche de couverture est constituée essentiellement d'un matériau polymère sélectionné dans le groupe constitué du polyéthylène, du polypropylène et du téréphtalate de polyéthylène, préférablement un polypropylène orienté biaxialement ou un téréphtalate de polyéthylène orienté biaxialement.

**11.** Procédé de fabrication d'un stratifié tel que défini dans la revendication 9 ou 10, le procédé comprenant au moins les étapes suivantes :

i) la préparation d'un film de polyalkyl(méth)acrylate selon au moins l'une des revendications 1 à 7 en utilisant une extrudeuse, dans laquelle le film de polyalkyl(méth)acrylate est obtenu ; et
ii) la liaison d'une couche de couverture au film de polyalkyl(méth)acrylate obtenu à l'étape i) en aval de l'extrudeuse.

**12.** Procédé selon la revendication 11, dans lequel on fait passer le stratifié obtenu à l'étape ii) entre une pluralité de rouleaux, au moins un rouleau orienté vers le côté du film de polyalkyl(méth)acrylate étant un rouleau refroidi.

**13.** Procédé de fabrication d'une étiquette de prévention de contrefaçon selon au moins l'une des revendications 1 à 8, le procédé comprenant au moins les étapes suivantes :

i) la préparation d'un film de polyalkyl(méth)acrylate selon au moins l'une des revendications 1 à 7 en utilisant une extrudeuse ; et
ii) la liaison d'une couche de couverture au film de polyalkyl(méth)acrylate obtenu à l'étape i) en aval de l'extrudeuse, dans laquelle un stratifié est obtenu ;
iii) la liaison d'une couche d'adhésif, optionnellement d'une couche de revêtement anti-adhésif et d'une couche de support, au stratifié obtenu à l'étape ii), dans laquelle un matériau pour étiquettes est obtenu ;
iv) le découpage par effleurage du matériau pour étiquettes obtenu à l'étape iii) et l'enlèvement de la matrice superflue ainsi produite, dans laquelle une pluralité d'étiquettes auto-adhésives individuelles de prévention de contrefaçon présentes sur une couche de support est obtenue.

**14.** Utilisation d'étiquettes de prévention de contrefaçon selon au moins l'une des revendications 1 à 8 pour la fabrication de cartes à puce, de documents, d'étiquettes de prévention de contrefaçon, d'autres étiquettes, ou d'étiquettes de prix.

**Fig. 1**

**Fig. 2**

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6280835 B
- WO 2016156137 A1
- EP 0113924 A
- EP 0522351 A
- EP 0465049 A
- EP 0683028 A
- US 20040091657 A1
- US 20110132522 A1
- US 6406787 B
- US RE24906 E

**Non-patent literature cited in the description**

- **HANS ZWEIFEL.** Plastics Additives Handbook. Hanser Verlag, 2001, 141 ff
- Kunststoffextrusionstechnik II. Hanser Verlag, 1986, 125 ff